# EUROPÄISCHE PATENTSCHRIFT

(11) **EP 3 939 772 B1**
(45) Veröffentlichungstag und Bekanntmachung des Hinweises auf die Patenterteilung: **12.04.2023**
(21) Anmeldenummer: 21183085.6
(22) Anmeldetag: 01.07.2021
(51) Int. Cl.: B29C 49/58, B29C 49/06, B29K 67/00, B29L 31/00, B29C 49/42

(54) **VORRICHTUNG ZUM UMFORMEN VON KUNSTSTOFFVORFORMLINGEN ZU KUNSTSTOFFBEHÄLTNISSEN MIT REGELEINHEIT FÜR DIE BLASDRÜCKE**
DEVICE FOR REFORMING PLASTIC PREFORMS INTO PLASTIC CONTAINERS WITH BLOWING PRESSURE CONTROL UNIT
DISPOSITIF DE TRANSFORMATION DE PRÉFORMES EN MATIÈRE PLASTIQUE EN RÉCIPIENTS EN MATIÈRE PLASTIQUE À L'AIDE DE L'UNITÉ DE RÉGULATION DE LA PRESSION DE SOUFFLAGE

(30) Priorität: 16.07.2020 DE 102020118835
(43) Veröffentlichungstag der Anmeldung: 19.01.2022
(73) Patentinhaber: KRONES AG, 93073 Neutraubling (DE)
(72) Erfinder: Hoellriegl, Thomas, 93073 Neutraubling (DE); Brunner, Andreas, 93073 Neutraubling (DE)
(74) Vertreter: Bittner, Bernhard

(56) Entgegenhaltungen:
- EP-A1- 2 402 143
- DE-A1- 10 240 252
- US-A1- 2010 285 169
- US-A1- 2016 139 613
- US-A1- 2017 072 619

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden üblicherweise erwärmte Kunststoffvorformlinge durch Beaufschlagung mit einem fließfähigen und insbesondere gasförmigen Medium, beispielsweise Druckluft, zu Kunststoffbehältnissen expandiert. Bei diesen fließfähigen Medien kann es sich insbesondere um Blasluft handeln, es ist jedoch auch eine Expansion mit flüssigen Medien denkbar.

Derartige aus dem Stand der Technik bekannte Vorrichtungen und Verfahren sind in den Patentschriften EP2402-143A1, US2017/072619A1, DE102-40252A1, US2016/139613A1 und US2010/285169A1 beschrieben.

Im Rahmen der Beaufschlagung mit diesen Medien, insbesondere mit Blasluft, ist es auch bekannt, dass unterschiedliche Druckniveaus verwendet werden, um die Kunststoffvorformlinge damit zu beaufschlagen. Zum Teil wird hierbei im internen Stand der Technik der Anmelderin ein Domdruckregler, insbesondere ein Domdruckminderer verwendet. Domdruckregler bzw. Domdruckminderer werden mittels Gasdruck betrieben. Anders als beispielsweise federbelastete Druckregler, wird die zur Druckminderung benötigte Öffnungskraft eines Ventils nicht durch eine Feder, sondern durch den Druck eines sogenannten Steuergases erzeugt.

Die Erfindung ist jedoch nicht notwendigerweise auf die Verwendung eines derartigen Domdruckreglers begrenzt. Wenn in einem oberen Bereich eines derartigen Domdruckreglers (der sogenannten Kuppel) ein Steuerdruck anliegt, so regelt eine darunter verbaute Mechanik. Dieser Steuerdruck kann intern (beispielsweise über ein Nadelventil) von einer Primärversorgung entnommen werden oder auch extern zugeführt werden, beispielsweise über ein Proportionalventil.

Für den Betrieb einer Vorrichtung zum Umformen von Kunststoffvorformlingen zu Kunststoffbehältnissen, beispielsweise einer Streckblasmaschine, werden üblicherweise weitere Funktionen benötigt.

So sollte eine Anschlussmöglichkeit zur Versorgung einer externen Steuerdruckversorgung aus dem Primärdruck vorgesehen sein. Weiterhin sollte vorteilhaft eine Verteileinrichtung vorgesehen sein, um den Sekundärdruck auf nachfolgende Komponenten zu verteilen. Daneben kann aber auch eine Verteileinrichtung vorgesehen sein, um Sicherheitseinrichtungen und Entlastungsventile anbauen zu können.

Daneben soll eine derartige Reduzierstation auch eine Befestigungsmöglichkeit für eine mechanische Haltevorrichtung aufweisen, um den Betrieb auf die Einheit einwirkenden Kräfte, wie eine Gewichtskraft, eine Zentrifugalkraft, eine Beschleunigung und Verzögerung, (beispielsweise bei einer Rotationsbewegung des Blasrades) aufzufangen.

Daneben kann auch noch die Möglichkeit vorgesehen sein, ein Entlüftungsventil anzusteuern, wobei hierfür beispielsweise ein Vorsteuerventil benötigt werden kann. Teilweise werden mehrere derartige Reduzierstationen benötigt, bzw. verbaut, sodass vorteilhaft auch eine Ventilinsel bzw. ein Ventilblock vorgesehen ist.

Dies führt dazu, dass im Stand der Technik für die benötigten Funktionen immer weitere Bauteile nötig sind. Hierdurch entsteht ein hoher Platzbedarf und auch entsprechende Kosten. Durch das größere Baugruppengewicht entstehen beispielsweise an Trägern wie einem Karussell höhere Momente beim Verzögern der Drehbewegung. Aufgrund von zwei angebotenen Baugrößen kann auch die Durchflussleistung der Reduzierstationen nur eingeschränkt auf den täglichen bzw. tatsächlichen Luftbedarf angepasst werden. Die dadurch entstehenden Abweichungen der Regelungen haben insbesondere bei einigen Drücken, wie einem Vorblasdruck, große Auswirkungen auf die Behältnisqualität.

Der vorliegenden Erfindung liegt daher die Aufgabe zugrunde, derartige Regeleinheiten besser an Umgebungen wie derartige Maschinen, insbesondere Blasformmaschinen, anzupassen und insbesondere eine Möglichkeit zu schaffen, um mehrere Funktionen zu integrieren. Dies wird erfindungsgemäß durch Vorrichtungen und Verfahren nach den unabhängigen Ansprüchen erreicht.

Eine erfindungsgemäße Vorrichtung zum Umformen von Kunststoffvorformlingen zu Kunststoffbehältnissen weist wenigstens eine Umformungsstation auf, welche eine Blasform aufweist, innerhalb derer die Kunststoffbehältnisse durch Beaufschlagung mit einem fließfähigen Medium zu den Kunststoffbehältnissen umformbar sind sowie eine Beaufschlagungseinrichtung, welche die Kunststoffvorformlinge mit dem fließfähigen Medium beaufschlagt, wobei die Vorrichtung wenigstens eine Medienzuführeinrichtung zum Zuführen des Mediums an die Beaufschlagungseinrichtung aufweist.

Erfindungsgemäß weist die Medienzuführeinrichtung wenigstens einen Druckeingang auf, um der Steuereinrichtung das fließfähige Medium zuzuführen sowie wenigstens zwei Ausgänge für den Sekundärdruck.

Unter den zuzuführenden Druck wird im Folgenden auch der Primärdruck verstanden, das heißt der zuzuführende Druck. Bei dem Sekundärdruck handelt es sich um einen Ausgangsdruck. Bevorzugt handelt es sich bei der Drucksteuereinrichtung auch um Druckreduziereinrichtung, welche den zugeführten Druck reduziert und als Sekundärdruck abgibt.

Durch das Vorsehen von wenigstens zwei Ausgängen (und bevorzugt mehreren Ausgängen) kann eine platz- und gewichtssparende Konstruktion erreicht werden. Auch kann die Versorgung der einzelnen Umformungsstationen mit dem fließfähigen Medium vereinfacht werden.

Unter der Beaufschlagungseinrichtung wird im Folgenden eine Einrichtung verstanden, welche der oder den Umformungsstationen zugeordnet ist (und/oder mit diesen wenigstens zeitweise in Strömungsverbindung steht) und welche die Kunststoffvorformlinge mit dem fließfähigen Medium, bei dem es sich insbesondere um Druckluft handelt, beaufschlagt bzw. versorgt. Diese Beaufschlagungseinrichtung kann selbst wieder mehrere Bestandteile aufweisen, wie etwa eine Ventileinheit, wie z.B. einen Ventilblock, der die Zuführung der Luft in die Kunststoffvorformlinge mit unterschiedlichen Druckstufen steuert.

Daneben kann die Beaufschlagungseinrichtung auch ein Beaufschlagungselement, wie insbesondere eine sog. Blasdüse aufweisen, welche an die Mündungen der Kunststoffvorformlinge anlegbar ist, um diese mit dem fließfähigen Medium zu versorgen bzw. zu expandieren.

Die Medienzuführeinrichtung führt der Beaufschlagungseinrichtung das fließfähige Medium, d.h. insbesondere die Druckluft zu. Dabei ist es möglich, dass eine derartige Medienzuführeinrichtung genau einer Beaufschlagungseinrichtung und/oder genau einer Umformungsstation zugeordnet ist. Bevorzugt ist jedoch eine Medienzuführeinrichtung mehreren Umformungsstationen und/oder Beaufschlagungseinrichtungen zugeordnet bzw. versorgt diese mit dem fließfähigen Medium.

Bei einer weiteren bevorzugten Ausführungsform weist diese Beaufschlagungseinrichtung eine Steuereinrichtung zum Steuern des Sekundärdrucks auf. Bei einer weiteren vorteilhaften Ausführungsform weist die Vorrichtung eine Drucklufterzeugungseinrichtung auf, bei der es sich insbesondere um einen Kompressor handelt. Diese Drucklufterzeugungseinrichtung kann die Medienzuführeinrichtung mit Druckluft versorgen.

Bei einer weiteren bevorzugten Ausführungsform weist die Vorrichtung eine Trägereinrichtung auf, um die Blasform zu tragen. So können beispielsweise Seitenteilträger vorgesehen sein, welche Seitenteile der Blasform tragen. Daneben kann auch ein Bodenteilträger vorgesehen sein, der einen Bodenteil der Blasform trägt. Bevorzugt bilden diese Seitenteile der Blasform und ein Bodenteil der Blasform in einem geschlossenen Zustand der Blasform den Hohlraum aus, innerhalb dessen die Kunststoffvorformlinge zu den Kunststoffbehältnissen expandiert werden. Bei den Kunststoffbehältnissen handelt es sich insbesondere um Kunststoffflaschen.

Bevorzugt handelt es sich bei dem fließfähigen Medium um Luft und insbesondere um Druckluft.

Bei einer weiteren bevorzugten Ausführungsform weist die Vorrichtung ein Beaufschlagungselement in Form einer Blasdüse auf, welche auf die Mündungen der Kunststoffvorformlinge zustellbar ist, um diese zu expandieren. Bevorzugt ist diese Blasdüse in einer Längsrichtung der Kunststoffvorformlinge bewegbar.

Bei einer weiteren bevorzugten Ausführungsform ist die Blasform öffenbar und auch schließbar, um so neue Kunststoffvorformlinge zuzuführen, bzw. auch umgeformte Behältnisse abzuführen.

Bei einer weiteren bevorzugten Ausführungsform weisen die Umformungsstationen jeweils stangenartige Körper, sogenannte Reckstangen, auf, welche in die Kunststoffvorformlinge einführbar sind, um diese in ihrer Längsrichtung zu dehnen.

Bei einer weiteren bevorzugten Ausführungsform weist die Umformungseinrichtung einen Träger auf, an dem die wenigstens eine Station angeordnet ist. Dieser Träger ist dabei bewegbar und besonders bevorzugt drehbar. Dabei handelt es sich bei diesem Träger bevorzugt um ein sogenanntes Blasrad. Bei einer bevorzugten Ausführungsform sind mehrere Umformungsstationen an diesem Träger angeordnet.

Bei einer weiteren bevorzugten Ausführungsform weist die Medienzuführeinrichtung mehrere Ausgänge auf. Bevorzugt weist die Medienzuführeinrichtung wenigstens vier und bevorzugt wenigstens fünf Ausgänge auf.

Bei einer weiteren bevorzugten Ausführungsform schließt sich an den Druckeingang wenigstens eine Ventileinrichtung an. Dabei kann es sich insbesondere um eine federbetätigte bzw. federbelastete Ventileinrichtung handeln. Bevorzugt kann diese Ventileinrichtung eine Strömung bzw. einen Strömungsquerschnitt der von dem Druckeingang zum den Druckausgängen gelangenden Luft steuern bzw. regeln.

Bei einer bevorzugten Ausführungsform weist die Medienzuführeinrichtung eine Steuereinrichtung zum Steuern eines Sekundärausgangsdrucks auf. Bei dieser Steuereinrichtung kann es sich beispielsweise um die oben bereits erwähnte Domdruckregeleinrichtung handeln.

Bei einer besonders bevorzugten Ausführungsform sind in die Medienzuführeinrichtung mehrere Einrichtungen bzw. Funktionen integriert. Bei einer bevorzugten Ausführungsform weist diese Medienzuführeinrichtung eine Verteileinrichtung zum Verteilen des Primärdrucks für eine externe Ansteuerung auf. Bevorzugt erfolgt dabei, wie oben erwähnt, eine Verteilung auf wenigstens zwei Ausgänge, bevorzugt auf wenigstens drei Ausgänge und bevorzugt auf wenigstens vier Eingänge.

Bei einer weiteren bevorzugten Ausführungsform weist die Vorrichtung eine Regelungseinrichtung zum Regeln des Sekundärdrucks auf. Dies bedeutet, dass insbesondere die oben erwähnte Steuereinrichtung zum Steuern des Sekundärausgangsdrucks eine Regelungseinrichtung zum Regeln des Sekundärausgangsdrucks ist. Bevorzugt können dabei unterschiedliche Ausgangsdrücke auf die Ausgänge geregelt werden.

Bei einer weiteren bevorzugten Ausführungsform weist die Vorrichtung eine Verteileinrichtung zum Verteilen des Sekundärdrucks auf mehrere Ausgänge auf. Dabei kann diese Verteileinrichtung einen Ringkanal aufweisen.

Bei einer weiteren bevorzugten Ausführungsform weist die Medienzuführeinrichtung eine Abzweigeinrichtung zum Abzweigen eines Steuerdrucks auf und insbesondere eine Abzweigeinrichtung zum Abzweigen eines Steuerdrucks von einem dem Druckeingang zugeführten Medium auf. Diese Abzweigeinrichtung kann wiederum, wie oben erwähnt, zum Steuern des Steuerdrucks bzw. zum Erzeugen des Steuerdrucks verwendet werden. Bei dieser Abzweigeinrichtung kann es sich beispielsweise um einen Ausgang an einem Gehäuse der Medienzuführeinrichtung handeln, von dem ein Anteil des Primärdrucks abgezweigt wird.

Bevorzugt weist diese Abzweigeinrichtung eine Leitung und insbesondere eine wenigstens abschnittweise flexible Leitung auf, welche bevorzugt von einem Eingang zu der Steuereinrichtung führt. Dabei ist es bevorzugt, dass von dem Druckeingang weniger als 50 %, bevorzugt weniger als 40 %, bevorzugt weniger als 30 % und bevorzugt weniger als 20 % und bevorzugt weniger als 10 % des Eingangsdrucks bzw. der Eingangsluftmenge abgezweigt werden.

Bei einer weiteren bevorzugten Ausführungsform weist die Medienzuführeinrichtung einen weiteren Druckausgang auf. Dieser weitere Druckausgang kann dabei mehrere Komponenten bzw. Funktionen aufweisen. So kann beispielsweise ein Entlastungsdruck zum Entlasten der Medienzuführeinrichtung abgezweigt werden.

Bevorzugt weist die Vorrichtung einen Ausgang zum Entlüften eines Sekundärdrucks auf. Bevorzugt ist auch hier eine Ventileinrichtung vorgesehen. Dabei ist es möglich, dass dieser Druckausgang durch den Primärdruck (bzw. durch den abgezweigten Anteil des Primärdrucks) in einer geschlossenen Stellung gehalten wird. Bei einem Abfallen des Primärdrucks kann dieses Ventil sich öffnen. Alternativ könnte auch ein elektrisch betriebenes Ventil eingesetzt werden.

Bei einer weiteren bevorzugten Ausführungsform weist die Medienzuführeinrichtung ein steuerbares Ventil und insbesondere ein Proportionalventil auf.

Dabei dient besonders bevorzugt dieses Proportionalventil zum Steuern des Steuerdrucks. Bevorzugt weist die Medienzuführeinrichtung mehrere Ventile auf, bevorzugt wenigstens zwei, bevorzugt wenigstens drei Ventile.

Bei einer weiteren bevorzugten Ausführungsform weist die Medienzuführeinrichtung einen Grundkörper auf, in welchen der Druckeingang, die Druckeingänge sowie wenigstens ein Bestandteil der Steuereinrichtung integriert sind. So kann beispielsweise ein Bestandteil des Domdruckreglers auch in dieses Gehäuse integriert sein.

Bei einer weiteren bevorzugten Ausführungsform erstreckt sich dieses Gehäuse zumindest auch in einer Längsrichtung und bevorzugt ist der Druckeingang in einer ersten Ebene angeordnet, und die Druckausgänge in einer hierzu versetzten zweiten Ebene.

Dies bedeutet, dass besonders bevorzugt der Druckeingang und die Druckausgänge bezüglich einander versetzt sind. Insbesondere ist der Druckeingang und die Druckausgänge versetzt in einer Bewegungsrichtung eines Ventilelements, welches diese Medienzuführeinrichtung aufweist.

Durch die oben erwähnte Anordnung des Eingangs und der Druckausgänge auf unterschiedlichen Ebenen können hier auch große Luftmengen bereitgestellt werden. Die Verluste werden verringert, indem der Einlass und der Auslass auf unterschiedlichen Ebenen angeordnet sind, um zwei Umlenkungen des Luftstroms einzusparen.

Bei einer bevorzugten Ausführungsform sind die Drucksteuerausgänge in einer Ebene angeordnet. Dabei können sich die Ausgänge beispielsweise senkrecht zu einer Längsrichtung des besagten Gehäuses erstrecken.

Durch dieses Gehäuse kann eine besonders platzsparende Bauweise erreicht werden.

Besonders bevorzugt ist wenigstens ein beweglicher Kolben und/oder ein Membranteller einer Ventileinrichtung in dieses Gehäuse integriert. Bei einer weiteren bevorzugten Ausführungsform ist auch eine Überprüfungseinrichtung, wie insbesondere ein sogenanntes "Schnüfflerrohr" in dieses Gehäuse integriert. Auf diese Weise kann insbesondere eine klein bauende Bauweise erreicht werden. Dieses "Schnüffelrohr" dient insbesondere dazu einen Sekundärdruck bzw. Regeldruck unter die Membran und/oder den Membranteller zu leiten. Hier baut sich insbesondere durch die Fläche der Membran eine Gegenkraft zu der von oben wirkenden Kraft, die von dem Steuerdruck erzeugt wird, auf.

Bevorzugt weist dieser Grundkörper bzw. dieses Gehäuse auch Möglichkeiten zum Anbauen weiterer Ventile auf. So kann insbesondere eine Möglichkeit vorhanden sein, um ein Sicherheitsventil anzubauen, welches teilweise sicherheitstechnisch gefordert wird.

Bei einer weiteren bevorzugten Ausführungsform weist die Medienzuführeinrichtung eine Druckmesseinrichtung auf. Dabei kann, wie erwähnt, ein sogenanntes Manometer vorgesehen sein. Denkbar ist auch eine elektronische Messung über einen Druckaufnehmer.

Bei einer weiteren bevorzugten Ausführungsform weist die Medienzuführeinrichtung auch eine Entlüftungseinrichtung auf, insbesondere, um einen Sekundärdruck zu entlüften. Dies kann beispielsweise vorgenommen werden, wenn die vollständige Konsole entlüftet wird.

Bei einer weiteren bevorzugten Ausführungsform ist eine Durchflussleitung an einen reellen Bedarf einer entsprechenden Maschine angepasst. Dabei kann dieses Anpassen variabel erfolgen. Eine Anpassung ist beispielsweise möglich in Abhängigkeit von einer Leistung der entsprechenden Umformungseinrichtung.

Bei einer weiteren bevorzugten Ausführungsform weist der Grundkörper eine Befestigungseinrichtung auf, um diesen an anderen Bereichen einer Maschine zu befestigen.

Bei einer weiteren bevorzugten Ausführungsform ist eine Entlastungseinrichtung zum Entlüften des Sekundärdrucks vorgesehen. Dabei ist bevorzugt ein Entlastungskolben vorgesehen. Dieser kann, wie oben erwähnt, durch eine Federkraft und einen Primärdruck in einer oberen Lage, insbesondere in einer oberen Endlage gehalten werden. In diesem Zustand ist bevorzugt ein Verbindungskanal zu einem Sekundärdruck verschlossen. Wird nun, wie erwähnt, der Primärdruck entlüftet, sinkt die Haltekraft des Entlastungskolbens. Auf diese Weise wird der Kolben nach unten gedrückt und der Sekundärdruck wird entlastet.

Bevorzugt weist die Vorrichtung eine möglichkeitsoptimale Auslegung der Nennleistung auf. Dabei kann die Regelhysterese wesentlich verringert werden, da zum Beispiel bei einem kleinen Luftbedarf (z.B. für Behälter mit einem Volumen von 0,3 I) auch nur eine kleine Luftmenge auf die Sekundärseite durchströmt. Auf diese Weise werden Überschwinger auf der Sekundärseite verhindert. Da insgesamt die hier beschriebene Einrichtung ein wesentlich geringeres Gesamtgewicht hat, kann auch eine Befestigung der Regeleinheit entsprechend leichter ausfallen.

Bei einer weiteren bevorzugten Ausführungsform weist die Vorrichtung und/oder die Medienzuführeinrichtung eine Filtereinrichtung auf. So kann die Medienzuführeinrichtung beispielsweise eine nachgeschaltete Filtereinrichtung aufweisen, beispielsweise, um den einzelnen Kunststoffvorformlingen Sterilluft zur Verfügung zu stellen. Die Anmelderin behält sich vor, das Vorsehen einer Filtereinrichtung und insbesondere einer nachgeschalteten Filtereinrichtung auch unabhängig von der hier beschriebenen Erfindung zu beanspruchen, also unabhängig davon, ob wenigstens zwei oder nur ein Druckausgang vorgesehen ist.

Eine erfindungsgemäße Vorrichtung zum Umformen von Kunststoffvorformlingen zu Kunststoffbehältnissen weist in diesem Fall wenigstens eine Umformungsstation auf, welche eine Blasform aufweist, innerhalb derer die Kunststoffbehältnisse durch Beaufschlagung mit einem fließfähigen Medium zu den Kunststoffbehältnissen umformbar sind sowie eine Beaufschlagungseinrichtung, welche die Kunststoffvorformlinge mit dem fließfähigen Medium beaufschlagt, wobei die Vorrichtung wenigstens eine Medienzuführeinrichtung zum Zuführen des Mediums an die Beaufschlagungseinrichtung aufweist.

Bei dieser Ausgestaltung weist die Medienzuführeinrichtung wenigstens einen Druckeingang auf, um der Steuereinrichtung das fließfähige Medium zuzuführen sowie wenigstens einen Ausgang für den Sekundärdruck sowie eine der Medienzuführeinrichtung nachgeschaltete Filtereinrichtung.

Bevorzugt kann die Vorrichtung auch mehrere der oben genannten Medienzuführeinrichtungen aufweisen, welche die Blasdrücke auf eine bestimmte Anzahl von Umformungsstationen verteilen.

Bei einer bevorzugten Ausführungsform weist die Umformungseinrichtung einen Reinraum auf, innerhalb dessen die Kunststoffvorformlinge zu den Kunststoffbehältnissen umgeformt werden. Dabei kann dieser Reinraum den Transportpfad der Kunststoffvorformlinge kanalartig umgeben. So ist es möglich, dass dieser Reinraum durch mehrere Wandungen begrenzt ist, wobei dabei eine Wandung gegenüber der anderen Wandung beweglich sein kann. Zwischen diesen Wandungen können Dichtungseinrichtungen vorgesehen sein, welche den Reinraum abdichten.

Die hier beschriebenen Filtereinrichtungen können integriert werden, um die Blasluft der einzelnen Blasdrücke steril zu filtern. Bevorzugt weisen die Filtereinrichtungen redundante Filterelemente auf.

Bei einer weiteren bevorzugten Ausführungsform kann auch das oben beschriebene Gehäuse bzw. der Grundkörper um eine Filtrationseinrichtung erweitert werden. Dies hat den Vorteil, dass Partikel, die bis dahin wieder in den Luftstrom gelangt sind, herausgefiltert werden. Diese Filtereinrichtungen können sich dabei an die jeweiligen Druckausgänge anschließen.

Es wäre jedoch auch möglich, dass eine Filtereinrichtung nicht der hier beschriebenen Medienzuführeinrichtung nachgeschaltet, sondern dieser vorgeschaltet ist. Dies wird unter Bezugnahme auf die Figuren genauer erläutert.

Insgesamt kann durch die Erfindung eine Einsparung von Bauraum, insbesondere an einem drehenden Karussell einer Blasmaschine und insbesondere einer Streckblasmaschine erreicht werden. Daneben kann auch eine Kosteneinsparung erreicht werden.

Weiterhin kann ein Anspruch- oder Regelverhalten verbessert werden. Daneben ist auch eine konstantere Produktionsqualität einer Blasformeinrichtung und insbesondere einer Streckblasmaschine möglich. Dies gilt insbesondere, wenn Recycling-Preforms verarbeitet werden sollen. Daneben kann auch eine Erweiterung der Funktionalität, beispielsweise einer Filtereinrichtung in Bezug auf die Partikel erfolgen.

Die vorliegende Erfindung ist weiterhin auf eine Medienzuführeinrichtung gemäß Anspruch 10 gerichtet.

Die vorliegende Erfindung ist weiterhin auf Verfahren zum Umformen von Kunststoffvorformlingen zu Kunststoffbehältnissen gemäß Anspruch 11 gerichtet.

Erfindungsgemäß weist die Medienzuführeinrichtung wenigstens einen Druckeingang auf, um der Medienzuführeinrichtung das fließfähige Medium zuzuführen (und/oder der Medienzuführungseinrichtung wird das fließfähige Medium über wenigstens einen Druckeingang zugeführt) sowie wenigstens zwei Ausgänge mittels derer ein Sekundärdruck (insbesondere aus der Medienzuführungseinrichtung) abgeführt wird, insbesondere um die Umformungsstation mit dem fließfähigen Medium zu versorgen.

Bevorzugt wird eine Vorrichtung der oben beschriebenen Art und/oder eine Medienzuführeinrichtung der oben beschriebenen Art verwendet.

Weitere Vorteile und Ausführungsform ergeben sich aus den beigefügten Zeichnungen. Darin zeigen:
- Fig. 1: Eine Darstellung einer Umformungsstation;
- Fig. 2: eine Darstellung einer erfindungsgemäßen Medienzuführeinrichtung;
- Fig. 3: eine Schnittdarstellung der in Fig. 2 gezeigten Medienzuführeinrichtung;
- Fig. 4: eine weitere Schnittdarstellung der in Fig. 2 gezeigten Medienzuführeinrichtung;
- Fig. 5: eine Detaildarstellung der Medienzuführeinrichtung;
- Fig. 6 und 7: zwei Darstellungen einer Verteileinrichtung für die Drücke;
- Fig. 8: eine Darstellung des Gehäuses der Medienzuführeinrichtung;
- Fig. 9: eine weitere Darstellung der Medienzuführeinrichtung;
- Fig. 10: eine Detailansicht der in Fig. 9 gezeigten Medienzuführeinrichtung;
- Fig. 11: eine weitere Detaildarstellung der Medienzuführeinrichtung;
- Fig. 12: eine weitere Darstellung der Medienzuführeinrichtung;
- Fig. 13: eine Darstellung der Medienzuführeinrichtung mit optionalem Sicherheitsventil;
- Fig. 14: eine Darstellung der Medienzuführeinrichtung mit Steuerventil;
- Fig. 15: eine Darstellung der Luftverläufe innerhalb der Medienzuführeinrichtung;
- Fig. 16: eine Darstellung der Medienzuführeinrichtung mit einer Filtereinrichtung;
- Fig. 17: eine blockdiagrammartige Darstellung von Medienzuführeinrichtungen mit Filtereinrichtung;
- Fig. 18: eine weitere blockdiagrammartige Darstellung der Luftzuführung;
- Fig. 19: eine blockdiagrammartige Darstellung einer Medienzuführeinrichtung mit Filtereinrichtung;
- Fig. 20: eine blockdiagrammartige Darstellung einer Medienzuführeinrichtung mit Filtereinrichtung;
- Fig. 21: eine weitere Darstellung einer Medienzuführeinrichtung mit Filtereinrichtungen; und
- Fig. 22: eine weitere Darstellung von Medienzuführeinrichtungen mit Filtereinrichtung.

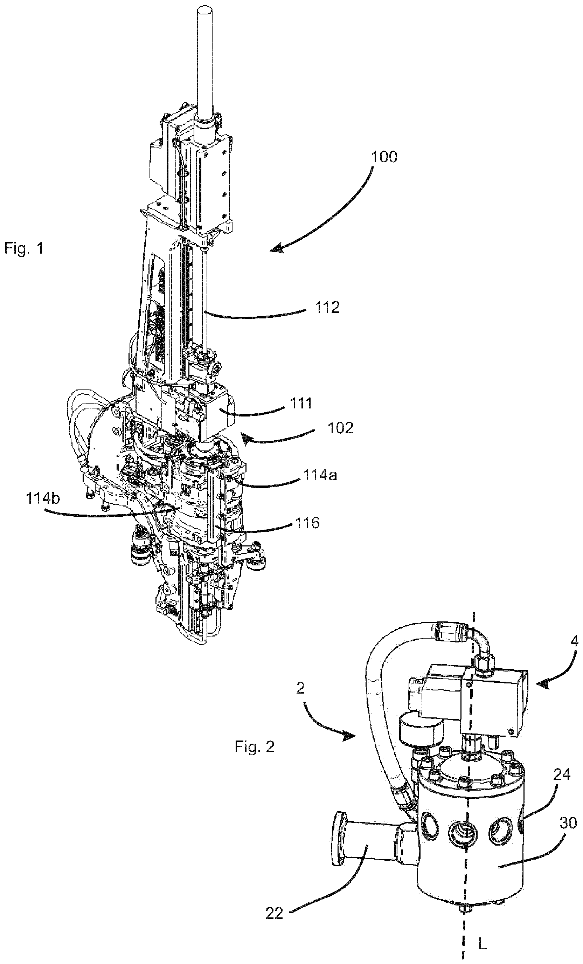

Figur 1 zeigt eine Darstellung einer Umformungsstation 100 für eine erfindungsgemäße Vorrichtung. Diese Umformungsstation weist dabei einen Ventilblock 111 auf, in dem eine Vielzahl von Ventilen angeordnet sein kann. Weiterhin ist eine Beaufschlagungseinrichtung 102 vorgesehen, die eine Blasdüse aufweist, welche hier in einer vertikalen Richtung V auf die (nicht gezeigten) Kunststoffvorformlinge zustellbar ist. Die Bezugszeichen 114a und 114b zeigen zwei Seitenteilträger, an denen wiederum zumindest mittelbar Blasformteile angeordnet sind (nicht gezeigt), welche die Blasform zum Expandieren der Kunststoffvorformlinge ausbilden.

Das Bezugszeichen 116 kennzeichnet einen Verriegelungsmechanismus, der in einem geschlossenen Zustand der Blasform deren beiden Seitenteile miteinander verriegelt.

Figur 2 zeigt eine Darstellung der erfindungsgemäßen Medienzuführungseinrichtung 2. Das Bezugszeichen 22 kennzeichnet einen Druckeingang, über welchen der Medienzuführeinrichtung 2 ein fließfähiges Medium und insbesondere Druckluft zugeführt wird. Dabei kann das fließfähige Medium bevorzugt mit einem Druck zugeführt werden, der größer ist als 10 bar, bevorzugt größer als 20 bar, bevorzugt größer als 30 bar, bevorzugt größer als 35 bar und bevorzugt größer als 40 bar. Daneben kann ein Druck zugeführt werden, der kleiner ist als 100 bar, bevorzugt kleiner als 80 bar, bevorzugt kleiner als 70 bar und bevorzugt kleiner als 60 bar.

Das Bezugszeichen 24 kennzeichnet einen Druckausgang für das gasförmige Medium. Das Bezugszeichen L kennzeichnet eine Längsrichtung der Medienzuführeinrichtung. Man erkennt, dass in dieser Längsrichtung L der Druckausgang 24 und auch weitere Druckausgänge gegenüber dem Druckeingang 22 versetzt sind. Auf diese Weise können, wie unten genauer erläutert, die Strömungen im Inneren des Gehäuses 30 vereinfacht werden. Das Bezugszeichen 4 kennzeichnet eine Steuerungseinrichtung bzw. eine Regeleinheit zur Steuerung bzw. Regelung der aus den Druckausgängen gelangenden Drücke.

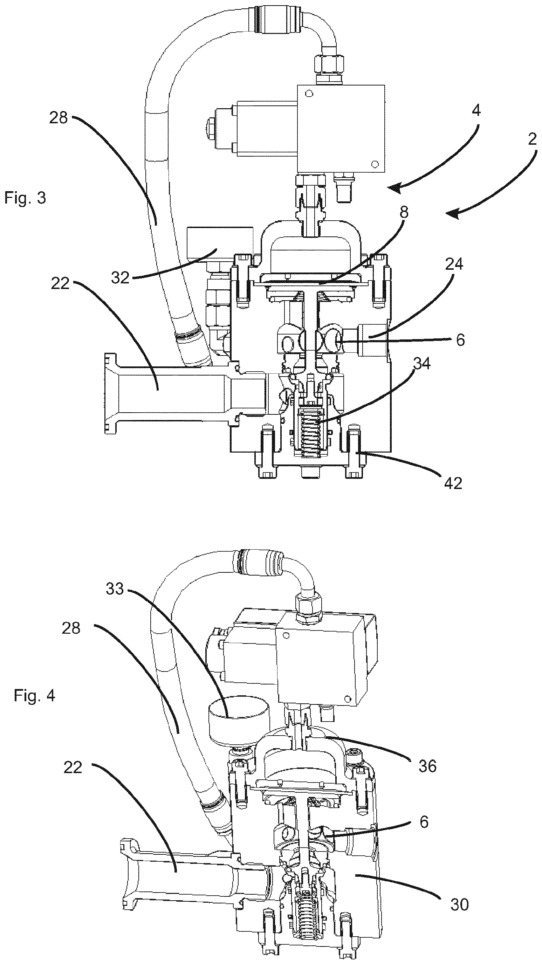

Figur 3 zeigt eine Schnittdarstellung der in Figur 2 gezeigten Medienzuführeinrichtung. Dabei ist ein Druckeingang 22 vorgesehen, sowie auch ein Druckausgang 24. Das Bezugszeigen 6 kennzeichnet eine Verteileinrichtung, welche das zur Verfügung gestellte gasförmige Medium bzw. den Druck auf mehrere Ausgänge verteilen kann. Diese Verteileinrichtung kann dabei ringkanalartig ausgebildet sein.

Das Bezugszeichen 34 kennzeichnet eine Federeinrichtung einer Ventileinrichtung, welche die Zuführung des über den Druckeingang 22 zu der Beaufschlagungseinrichtung 102 gelangenden Drucks zu der Verteileinrichtung 6 zu steuert.

Das Bezugszeichen 33 kennzeichnet eine Druckentlastungseinrichtung, die ebenfalls an einem der Druckausgänge angeschlossen ist. Über eine Verbindungsleitung 28 wird ein Teil der über den Eingang 22 zugeführten Druckluft zu der Steuerungseinrichtung 2 geleitet. Diese kann beispielsweise ein Proportionalventil aufweisen. Anstelle der Verbindungsleitung 28 könnte auch ein gebohrter Kanal vorgesehen sein, der die entsprechende Strömungsverbindung bildet.

Das Bezugszeichen 8 kennzeichnet einen Kolben 8, bzw. einen Teller 8, der Bestandteil eines Domdruckreglers ist welcher die oben erwähnte Ventileinrichtung bildet. Durch den zugeführten Steuerdruck kann auf diese Weise dieser Teller 8 bewegt werden und damit die oben genannte Ventileinrichtung gesteuert werden. Dabei ist nicht nur eine Steuerung zwischen einem geöffneten und einem geschlossenen Zustand möglich, sondern auch eine Druckregulierung, das heißt das Verteilen unterschiedlicher Drücke. Die Federeinrichtung 34 drängt den Kolben 8 nach oben

Figur 4 zeigt eine weitere Darstellung der Medienzuführeinrichtung 2. Hier ist das Bezugszeichen 30 auf das Gehäuse bezogen, in den sowohl der Druckeingang 22 als auch die Druckausgänge integriert sind als auch das Ventil 34, welches, wie oben erwähnt, über die Verbindungsleitung 28 ebenfalls pneumatisch gesteuert wird. Das Bezugszeichen 36 kennzeichnet ein Gehäuseteil des Domdruckreglers, in dem auch der Ventilteller 8 integriert ist.

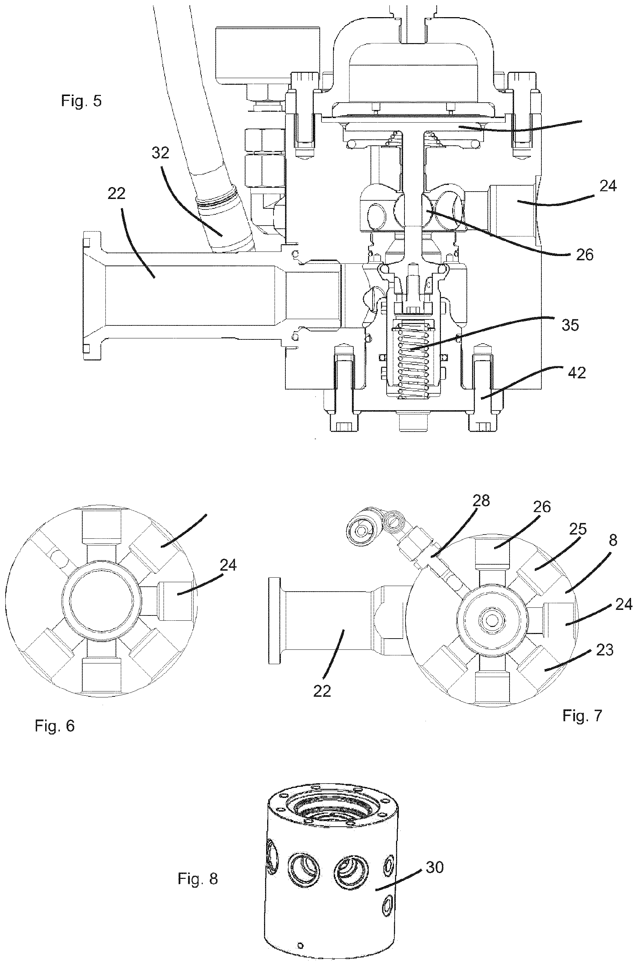

Figur 5 zeigt eine weitere Schnittdarstellung der Medienzuführeinrichtung. Hier ist auch ein Anschluss 32 vorgesehen, der einen Teil des über den Eingang 22 zugeführten Drucks abzweigt und, wie in Figur 4 gezeigt, zu der Medienzuführeinrichtung 2 führt. Die Bezugszeichen 24 und 26 kennzeichnen zwei Ausgänge für den Sekundärdruck.

Die Figuren 6 und 7 zeigen die Verteileinrichtung. Man erkennt, dass hier eine größere Anzahl an Druckausgängen 23, 24, 25, 26 und 28 vorgesehen ist. An diesen Druckausgängen können unterschiedliche Funktionen angeordnet sein.

Figur 8 zeigt eine Darstellung des Gehäuses, in welches, wie oben erwähnt, die einzelnen Ventile und Komponenten integriert sind.

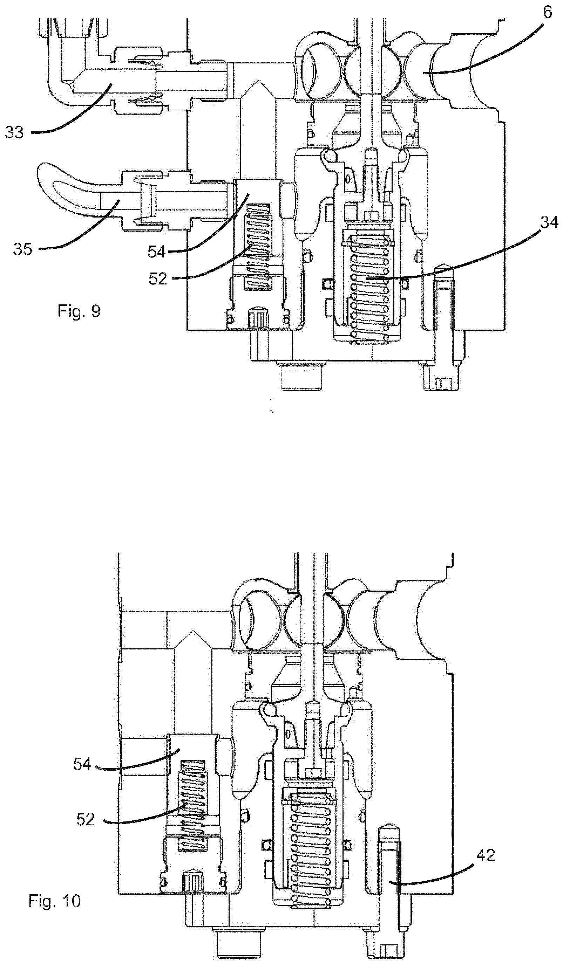

Figur 9 zeigt eine weitere Schnittdarstellung der Medienzuführeinrichtung. Hier ist auch der Anschluss 35 dargestellt, mit dem das Proportionalventil zum Steuern der Druckregelung versorgt wird. Dabei kann eine Ventileinrichtung 52, 54 vorgesehen sein, welche bei einem Anliegen von Primärdruck in einem geschlossenen Zustand gehalten wird und bei Absinken des Primärdrucks durch diesen geöffnet wird, sodass auf diese Weise auch der Druck auf der Sekundärseite absinkt.

Figur 10 zeigt eine weitere Detaildarstellung dieser Ventileinrichtung 52, 54. Dabei bezieht sich das Bezugszeichen 42 auf eine Befestigungseinrichtung, um das gesamte Gehäuse an weiteren Bauteilen der Vorrichtung zu befestigen.

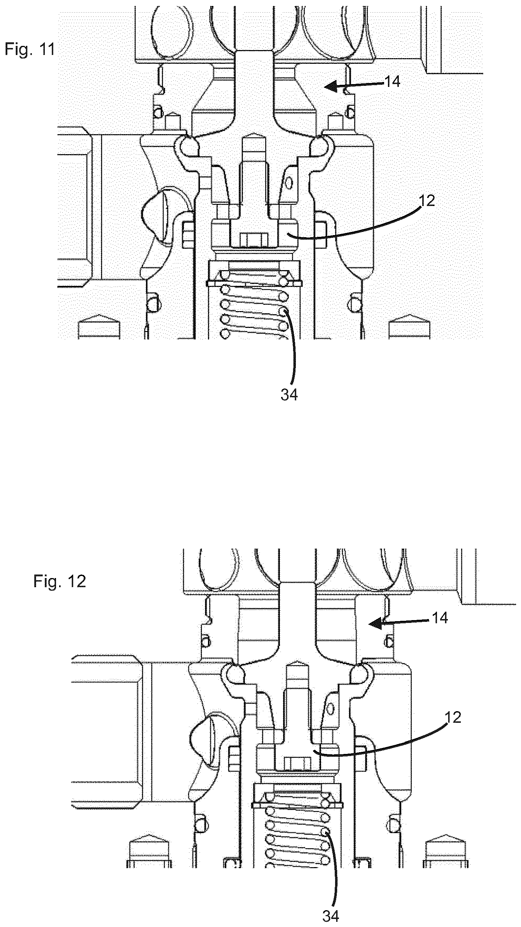

Die Figuren 11 und 12 zeigen zwei weitere Detaildarstellungen der erfindungsgemäßen Medienzuführeinrichtung. Dabei ist insbesondere der Regelkolben 12 dargestellt, der durch eine Bewegung (in den Fig. 11 und 12) nach unten den Strömungsweg von primär nach sekundär freigibt. Die Figuren 11 und 12 unterscheiden sich insbesondere hinsichtlich der oberhalb des Regelkolbens 12 angeordneten bzw. verbauten Dichtkante 14. Durch deren Gestaltung ist eine Nennweite und daher auch die Leistung des Domdruckreglers auf den jeweiligen Luftbedarf einer Blasmaschine einstellbar.

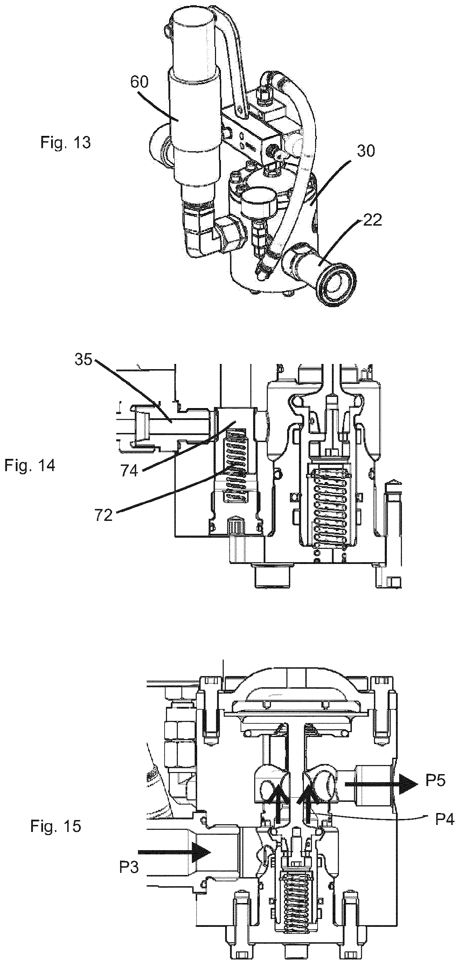

Figur 13 zeigt eine Darstellung der Medienzuführeinrichtung mit einem zusätzlich vorhandenen Sicherheitsventil 60. Dieses Sicherheitsventil 60 kann dabei ebenfalls an das Gehäuse 30 montiert sein und über einen der Druckausgänge versorgt werden. Ebenfalls ist wiederum der Druckeingang 22 zu erkennen. Daneben ist es auch denkbar, in diesem Bereich weitere Einrichtungen anzuordnen, wie etwa insbesondere Sensoreinrichtungen wie insbesondere aber nicht ausschließlich Druckaufnehmer bzw. Druckmesseinrichtungen, Schwingungssensoren, Temperaturmesseinrichtungen und dergleichen.

Figur 14 veranschaulicht die Funktion eines Entlastungskolbens. Hier ist ein Entlastungskolben 74 dargestellt, der durch den Primärdruck und dem Druck einer Feder 72 in einer oberen Endlage gehalten wird. Der Verbindungskanal zum Sekundärdruck ist auf diese Weise verschlossen. Dies ist der Betriebszustand der entsprechenden Vorrichtung. Wird der Primärdruck entlüftet, sinkt die Haltekraft des Entlastungskolbens 74. Der Entlastungskolben wird nach unten gedrückt und der Sekundärdruck wird entlastet. In der Basisfunktion ist kein zusätzliches Vorsteuerventil notwendig. Der Primärdruck kann bei der in Figur 14 gezeigten Darstellung beispielsweise von unten hier anliegen.

Alternativ zu der in Figur 14 gezeigten Darstellung kann auch ein elektrisch angesteuertes Ventil direkt in oder an dem Gehäuse 30 der Druckregeleinheit bzw. der Medienzuführeinrichtung angeordnet sein.

Figur 15 veranschaulicht den Verlauf der Strömungen innerhalb der Medienzuführeinrichtung. Insbesondere bei Streckblasmaschinen gilt die Anforderung neben entsprechender Regelgenauigkeit auch die Bereitstellung von großen Luftmengen. Um hier die Verluste zu verringern, werden, wie oben erwähnt, der Einlass 22 und die Ausgänge 24 auf unterschiedlichen Ebenen angesiedelt, um auf diese Weise zwei Umlenkungen des Luftstroms innerhalb des Gehäuses einzusparen. Die Pfeile P3, P4 und P5 veranschaulichen die Luftströmung im Inneren des Gehäuses 30. Wenn die entsprechenden Ein- und Ausgänge auf gleichen Ebenen angeordnet wären, würde das Ventil zwei weitere Umlenkungen erfordern.

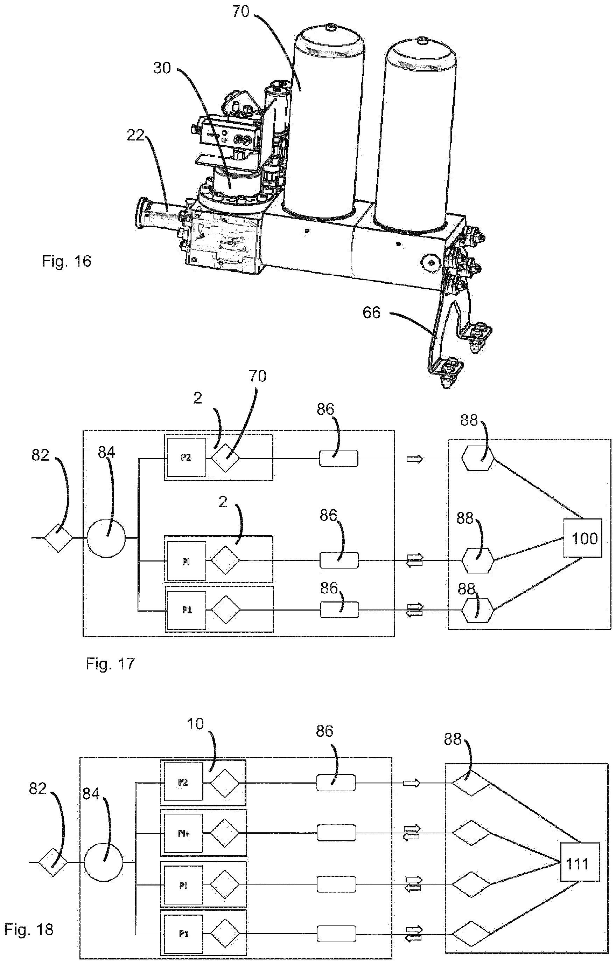

Figur 16 zeigt eine weitere Darstellung, wobei hier der Medienzuführeinrichtung Filtereinheiten 70 nachgeschaltet sind. Das Bezugszeichen 66 kennzeichnet wiederum Befestigungseinrichtungen.

Figur 17 kennzeichnet eine blockdiagrammartige Darstellung der gesamten Vorrichtung. Dabei kennzeichnet das Bezugszeichen 82 eine Luftwand, die insbesondere zur Isolierung gegenüber der Umgebung dient. Das Bezugszeichen 84 kennzeichnet einen Drehverteiler bzw. eine Drehdurchführung, über welche Luft auf mehrere Stationen verteilt werden kann. Die Bezugszeichen P1, Pi und P2 kennzeichnen unterschiedliche Druckstufen, die hier jeweils mit den erfindungsgemäßen Reduzierstationen bzw. Medienzuführeinrichtungen oder Druckverteileinrichtungen ausgestaltet sind. Dabei ist, wie dargestellt, den jeweiligen Reduzierstationen jeweils eine Filtereinheit 70 nachgeschaltet.

Das Bezugszeichen 86 kennzeichnet Ringkanäle, denen die einzelnen Druckstufen zugeführt werden. Über diese Ringkanäle werden wiederum einzelne Blasventile 88 der einzelnen Umformungsstation zugeführt. Das Bezugszeichen 100 kennzeichnet die Umformungsstationen selbst. Damit erkennt man, dass die Medienzuführeinrichtungen zum Versorgen mehrerer Umformungsstationen dienen.

Durch die Filtereinheiten 70 kann die Blasluft der einzelnen Blasdrücke steril gefiltert werden. Dabei ist es auch möglich, dass redundante Filterelemente oder auch mehrere Filterelemente eingesetzt werden.

Figur 18 zeigt eine weitere blockdiagrammartige Darstellung der Luftzuführung. Aufgrund der Erfahrungen der Anmelderin hat sich gezeigt, dass Dichtungen der Drehdurchführungen einen gewissen Verschleiß in Form eines Abriebs haben. Dieser Abrieb, insbesondere bei dem Drehverteiler d.h. der Drehdurchführung 84 kann vom Luftstrom mitgerissen werden. Um diese Partikelfracht der Blasluft zu reduzieren, wäre es auch denkbar, das Gehäuse der Druckregeleinheit um eine Filtration zu erweitern. Dies hätte den Vorteil, dass Partikel, die bis dahin wieder in den Luftstrom gelangt sind, ausgefiltert werden. Daneben bleiben jedoch auch die hier beschriebenen bisherigen Vorteile bei der Filtration bestehen.

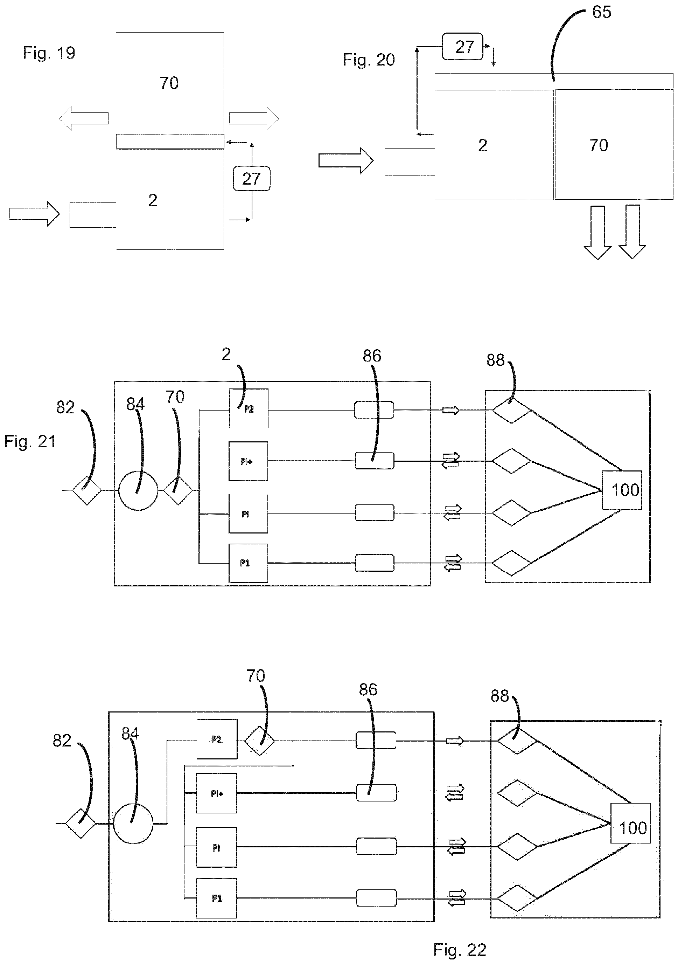

Die Figuren 19 und 20 veranschaulichen zwei Vorgehensweisen, bei denen eine direkte Kombination mit Filterelementen vorgenommen wird. Dabei bezieht sich das Bezugszeichen 2 wiederum auf eine Druckregelung einschließlich einer Entlüftung und Sicherheitskomponenten. Das Bezugszeichen 27 kennzeichnet ein Proportionalventil. Das Bezugszeichen 70 kennzeichnet wiederum die Filtrationselemente bzw. die Filtereinheit.

Bei der in Figur 20 gezeigten Darstellung wird ebenfalls eine Druckregelung, ein Proportionalventil und eine Filtereinheit 70 vorgesehen. Das Verbindungselement 65 dient der mechanischen Verbindung und/oder der Durchleitung von Druckluft.

Figur 21 zeigt eine weitere mögliche Filteranordnung. Bei dieser Ausgestaltung sind insgesamt vier Druckniveaus P1, Pi, Pi+ und P2 vorgesehen, welche zum Expandieren der Kunststoffbehältnisse dienen. Dabei kennzeichnet das Bezugszeichen P2 den höchsten Druck, den Fertigblasdruck. Die anderen Druckstufen können, wie durch die Doppelpfeile angezeigt, auch wieder in die jeweiligen Ringkanäle 86 recycelt werden. Bei der in Figur 21 gezeigten Darstellung ist hier eine zentrale Filtereinheit 70 vorgesehen, welches eine Filterung der Luft durchführt, bevor diese zu den einzelnen Reduzierstationen gelangt.

Die in Figur 22 gezeigte Darstellung weist ebenfalls eine Filtereinheit 70 auf, die sich hier jedoch an die Druckstation des höchsten Drucks P2 anschließt. Von dort wird dieser Druck abgezweigt auf die weiteren Druckstufen P1, PI und PI+.

### Bezugszeichenliste

- 2: Medienzuführeinrichtung
- 4: Steuereinrichtung (Propventil)
- 6: Verteileinrichtung
- 8: Kolben/Teller
- 12: Regelkolben
- 14: Dichtkante
- 22: Druckeingang
- 23, 25, 28: Druckausgänge
- 24, 26: Druckausgänge
- 27: Proportionalventil
- 30: Gehäuse
- 32: Druckausgang
- 33: Druckentlastungseinrichtung
- 34: Ventileinrichtung/Ventil
- 35: Anschluss
- 36: Gehäuseteil des Domdruckreglers
- 42: Befestigungseinrichtung
- 52, 54: Ventileinrichtung
- 66: Befestigungseinrichtungen
- 70: Filtereinheit
- 72: Feder
- 74: Entlastungskolben
- 82: Luftwand
- 84: Drehverteiler/Drehdurchführung
- 86: Ringkanäle
- 88: Blasventile
- 100: Umformungsstation
- 102: Beaufschlagungselement
- 111: Ventilblock
- 114a, 114b: Seitenteilträger
- 116: Verriegelungsmechanismus
- V: Richtung
- L: Längsrichtung
- P3, P4, P5: Pfeile zur Darstellung der Luftströmung
- P1, Pi, Pi+,P2: Druckstufen/Druckniveaus

## Patentansprüche

1. Vorrichtung zum Umformen von Kunststoffvorformlingen zu Kunststoffbehältnissen mit wenigstens einer Umformungsstation (100), welche eine Blasform aufweist, innerhalb derer die Kunststoffvorformlinge durch Beaufschlagung mit einem fließfähigen Medium zu den Kunststoffbehältnissen umformbar sind und mit einer Beaufschlagungseinrichtung (102), welche die Kunststoffvorformlinge mit dem fließfähigen Medium beaufschlagt, wobei die Vorrichtung (1) eine Medienzuführeinrichtung (2) zum Zuführen des Mediums an die Beaufschlagungseinrichtung aufweist,
**dadurch gekennzeichnet, dass**
die Medienzuführeinrichtung (2) eine Steuereinrichtung (4) zum Steuern eines Sekundärausgangsdrucks aufweist und wenigstens einen Druckeingang (22) aufweist, um der Steuereinrichtung (4) das fließfähige Medium zuzuführen sowie wenigstens zwei Ausgänge (24, 26) für einen Sekundärdruck aufweist.

2. Vorrichtung nach wenigstens einem der vorangegangenen Ansprüche,
**dadurch gekennzeichnet, dass**
die Medienzuführeinrichtung eine Verteileinrichtung (6) zum Verteilen des Eingangsdrucks aufweist.

3. Vorrichtung nach wenigstens einem der vorangegangenen Ansprüche,
**dadurch gekennzeichnet, dass**
die Medienzuführeinrichtung (2) eine Abzweigeinrichtung (26) zum Abzweigen eines Steuerdrucks von einem dem Druckeingang zugeführten Medium aufweist.

4. Vorrichtung nach wenigstens einem der vorangegangenen Ansprüche,
**dadurch gekennzeichnet, dass**
die Medienzuführeinrichtung (2) einen weiteren Druckausgang (25, 28) aufweist.

5. Vorrichtung nach wenigstens einem der vorangegangenen Ansprüche,
**dadurch gekennzeichnet, dass**
die Medienzuführeinrichtung (2) ein steuerbares Ventil und insbesondere ein Proportionalventil aufweist.

6. Vorrichtung nach wenigstens einem der vorangegangenen Ansprüche,
**dadurch gekennzeichnet, dass**
die Medienzuführeinrichtung (2) einen Grundkörper (20) aufweist, in welchen der Druckeingang, die Druckausgänge sowie wenigstens ein Bestandteil der Steuereinrichtung integriert sind.

7. Vorrichtung nach wenigstens einem der vorangegangenen Ansprüche,
**dadurch gekennzeichnet, dass**
die Medienzuführeinrichtung (2) eine Druckmesseinrichtung aufweist.

8. Vorrichtung nach wenigstens einem der vorangegangenen Ansprüche,
**dadurch gekennzeichnet, dass**
die Medienzuführeinrichtung (2) eine Filtereinrichtung aufweist.

9. Vorrichtung nach wenigstens einem der vorangegangenen Ansprüche,
**dadurch gekennzeichnet, dass**
die Vorrichtung eine Filtereinrichtung aufweist, wobei bevorzugt diese Filtereinrichtung der Medienzuführeinrichtung nachgeschaltet ist

10. Medienzuführeinrichtung (2) für eine Vorrichtung zum Umformen von Kunststoffvorformlingen zu Kunststoffbehältnissen wobei die Medienzuführeinrichtung (2) zum Steuern der Beaufschlagung der Kunststoffvorformlinge mit einem fließfähigen Medium dient,
**dadurch gekennzeichnet, dass**
die Medienzuführeinrichtung (2) eine Steuereinrichtung (4) zum Steuern eines Sekundärausgangsdrucks aufweist und wenigstens einen Druckeingang (22) aufweist, um der Steuereinrichtung (4) das fließfähige Medium zuzuführen sowie wenigstens zwei Ausgänge (24, 26) für einen Sekundärdruck aufweist.

11. Verfahren zum Umformen von Kunststoffvorformlingen zu Kunststoffbehältnissen mit wenigstens einer Umformungsstation (100), welche eine Blasform aufweist, innerhalb derer die Kunststoffvorformlinge durch Beaufschlagung mit einem fließfähigen Medium zu den Kunststoffbehältnissen umgeformt werden und mit einer Beaufschlagungseinrichtung (102), welche die Kunststoffvorformlinge mit dem fließfähigen Medium beaufschlagt, wobei die Vorrichtung (1) eine Medienzuführeinrichtung (2) zum Zuführen des Mediums an die Beaufschlagungseinrichtung aufweist,
**dadurch gekennzeichnet, dass**
die Medienzuführeinrichtung (2) eine Steuereinrichtung (4) zum Steuern eines Sekundärausgangsdrucks aufweist und wenigstens einen Druckeingang (22) aufweist, um der Medienzuführeinrichtung (2) das fließfähige Medium zuzuführen sowie wenigstens zwei Ausgänge (24, 26) aufweist, mittels derer ein Sekundärdruck abgeführt wird, insbesondere um die Umformungsstation mit dem fließfähigen Medium zu versorgen.

## Claims

1. Apparatus for forming plastic preforms into plastic containers, having at least one forming station (100) which has a blow mold within which the plastic preforms can be formed into the plastic containers by applying a flowable medium, and having an application device (102) which applies the plastic preforms with the flowable medium, wherein the apparatus (1) having a medium supply device (2) for supplying the medium to the application device,
**characterized in that**
the media supply device (2) has a control device (4) for controlling a secondary outlet pressure and has at least one pressure inlet (22) for supplying the flowable medium to the control device (4) and at least two outlets (24, 26) for a secondary pressure.

2. Apparatus according to at least one of the preceding claims,
**characterized in that**
the media supply device has a distribution device (6) for distributing the inlet pressure.

3. Apparatus according to at least one of the preceding claims,
**characterized in that**
the media supply device (2) has a branching device (26) for branching off a control pressure from a medium supplied to the pressure inlet.

4. Apparatus according to at least one of the preceding claims,
**characterized in that**
the media supply device (2) has a further pressure outlet (25, 28).

5. Apparatus according to at least one of the preceding claims,
**characterized in that**
the media supply device (2) has a controllable valve and in particular a proportional valve.

6. Apparatus according to at least one of the preceding claims,
**characterized in that**
the media supply device (2) has a main body (20) in which the pressure inlet, the pressure outlets and at least one component of the control device are integrated.

7. Apparatus according to at least one of the preceding claims,
**characterized in that**
the media supply device (2) has a pressure measuring device.

8. Apparatus according to at least one of the preceding claims,
**characterized in that**
the media supply device (2) has a filter device.

9. Apparatus according to at least one of the preceding claims,
**characterized in that**
the apparatus has a filter device, wherein preferably this filter device being connected downstream of the media supply device.

10. Media supply device (2) for an apparatus for forming plastic preforms into plastic containers, wherein the media supply device (2) serving to control the application of a flowable medium to the plastic preforms,
**characterized in that**
the media supply device (2) has a control device (4) for controlling a secondary outlet pressure and has at least one pressure inlet (22) for supplying the flowable medium to the control device (4) and at least two outlets (24, 26) for a secondary pressure.

11. Method for forming plastic preforms into plastic containers, having at least one forming station (100) which has a blow mold, within which the plastic preforms are formed into the plastic containers by applying a flowable medium, and having an application device (102) which applies the flowable medium to the plastic preforms, wherein the apparatus (1) having a media supply device (2) for supplying the medium to the application device,
**characterized in that**
the media supply device (2) has a control device (4) for controlling a secondary outlet pressure and has at least one pressure inlet (22) for supplying the media supply device (2) with the flowable medium and at least two outlets (24, 26) by means of which a secondary pressure is discharged, in particular for supplying the forming station with the flowable medium.

## Revendications

1. Dispositif de transformation de préformes en matière plastique en récipients en matière plastique avec au moins une station de transformation (100) qui présente un moule de soufflage, à l'intérieur duquel les préformes en matière plastique peuvent être transformées par l'alimentation en un milieu coulant en les récipients en matière plastique et avec un dispositif d'alimentation (102) qui alimente les préformes en matière plastique en milieu coulant, dans lequel le dispositif (1) présente un dispositif de fourniture de milieu (2) pour la fourniture du milieu au dispositif d'alimentation,
**caractérisé en ce que**
le dispositif de fourniture de milieu (2) présente un dispositif de commande (4) pour la commande d'une pression de sortie secondaire et présente au moins une entrée de pression (22) afin de fournir le milieu coulant au dispositif de commande (4), ainsi que présente au moins deux sorties (24, 26) pour une pression secondaire.

2. Dispositif selon au moins l'une quelconque des revendications précédentes,
**caractérisé en ce que**
le dispositif de fourniture de milieu présente un dispositif de distribution (6) pour la distribution de la pression d'entrée.

3. Dispositif selon au moins l'une quelconque des revendications précédentes,
**caractérisé en ce que**
le dispositif de fourniture de milieu (2) présente un dispositif de dérivation (26) pour la dérivation d'une pression de commande d'un milieu fourni à l'entrée de pression.

4. Dispositif selon au moins l'une quelconque des revendications précédentes,
**caractérisé en ce que**
le dispositif de fourniture de milieu (2) présente une autre sortie de pression (25, 28).

5. Dispositif selon au moins l'une quelconque des revendications précédentes,
**caractérisé en ce que**
le dispositif de fourniture de milieu (2) présente une soupape commandable et en particulier une soupape proportionnelle.

6. Dispositif selon au moins l'une quelconque des revendications précédentes,
**caractérisé en ce que**
le dispositif de fourniture de milieu (2) présente un corps de base (20), dans lequel l'entrée de pression, les sorties de pression ainsi qu'au moins un constituant du dispositif de commande sont intégrés.

7. Dispositif selon au moins l'une quelconque des revendications précédentes,
**caractérisé en ce que**
le dispositif de fourniture de milieu (2) présente un dispositif de mesure de pression.

8. Dispositif selon au moins l'une quelconque des revendications précédentes,
**caractérisé en ce que**
le dispositif de fourniture de milieu (2) présente un dispositif de filtre.

9. Dispositif selon au moins l'une quelconque des revendications précédentes,
**caractérisé en ce que**
le dispositif présente un dispositif de filtre, dans lequel ce dispositif de filtre est de préférence monté en aval du dispositif de fourniture de milieu.

10. Dispositif de fourniture de milieu (2) pour un dispositif de transformation de préformes en matière plastique en récipients en matière plastique, dans lequel le dispositif de fourniture de milieu (2) sert à la commande de l'alimentation des préformes en matière plastique en un milieu coulant,
**caractérisé en ce que**
le dispositif de fourniture de milieu (2) présente un dispositif de commande (4) pour la commande d'une pression de sortie secondaire et présente au moins une entrée de pression (22) afin de fournir le milieu coulant au dispositif de commande (4) ainsi que présente au moins deux sorties (24, 26) pour une pression secondaire.

11. Procédé de transformation de préformes en matière plastique en récipients en matière plastique avec au moins une station de transformation (100) qui présente un moule de soufflage, à l'intérieur duquel les préformes en matière plastique peuvent être transformées par l'alimentation en un milieu coulant en les récipients en matière plastique et avec un dispositif d'alimentation (102) qui alimente les préformes en matière plastique en milieu coulant, dans lequel le dispositif (1) présente un dispositif de fourniture de milieu (2) pour la fourniture du milieu au dispositif d'alimentation,
**caractérisé en ce que**
le dispositif de fourniture de milieu (2) présente un dispositif de commande (4) pour la commande d'une pression de sortie secondaire et présente au moins une entrée de pression (22) afin de fournir le milieu coulant au dispositif de fourniture de milieu (2) ainsi que présente au moins deux sorties (24, 26), au moyen desquelles une pression secondaire est évacuée, en particulier afin d'alimenter la station de transformation en milieu coulant.
